(19) **Europäisches Patentamt**
**European Patent Office**
**Office européen des brevets**

(11) **EP 2 235 477 B1**

(12) **FASCICULE DE BREVET EUROPEEN**

(45) Date de publication et mention
de la délivrance du brevet:
**04.04.2012 Bulletin 2012/14**

(21) Numéro de dépôt: **09704762.5**

(22) Date de dépôt: **23.01.2009**

(51) Int Cl.:
**G01C 21/32** *(2006.01)*  **G06Q 10/00** *(2012.01)*

(86) Numéro de dépôt international:
**PCT/EP2009/050806**

(87) Numéro de publication internationale:
**WO 2009/092812 (30.07.2009 Gazette 2009/31)**

(54) **ESTIMATION DE PLUS COURT CHEMIN DÉPENDANT DU TEMPS DANS UN RÉSEAU ROUTIER**

ZEITABHÄNGIGE ABSCHÄTZUNG DES KÜRZESTEN WEGES IN EINEM STRASSENNETZWERK

TIME DEPENDENT ESTIMATION OF THE SHORTEST ROUTE IN A ROAD NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **24.01.2008 FR 0800366**

(43) Date de publication de la demande:
**06.10.2010 Bulletin 2010/40**

(73) Titulaire: **Mediamobile**
**94200 Ivry sur Seine (FR)**

(72) Inventeur: **NANNICINI, Giacomo**
**F-75018 Paris (FR)**

(74) Mandataire: **Gevers France**
**23bis, rue de Turin**
**75008 Paris (FR)**

(56) Documents cités:
**EP-A- 1 335 315        WO-A-2008/053240**
**FR-A- 2 677 756        US-A1- 2004 039 520**
**US-A1- 2008 094 250    US-B1- 6 636 800**

## Description

La présente invention concerne une estimation d'un plus court chemin en temps de parcours dépendant d'un instant de départ donné et de l'évolution du trafic dans un réseau routier, appelé le plus court chemin dépendant du temps.

Plus particulièrement, elle a trait à une détermination d'un chemin très proche du plus court chemin selon le temps de parcours prenant en compte, pendant le parcours en temps réel, de l'évolution du trafic sur un réseau routier dont le temps de parcours sur un arc donné est prévisible dans le futur.

Des systèmes d'informations routières fournissent des historiques sous forme de vitesse ou des temps de parcours exprimant des conditions de circulation sur des troncons routiers. Ces historiques sont déterminés à partir d'informations relevées en permanence sur le terrain par différents moyens tels que des capteurs fixes, ou des capteurs mobiles dans des véhicules. Des procédés statistiques d'analyse déterminent des profils stables et très réalistes de caractéristiques fortement probables du trafic à un instant de départ donné. Certains procédés s'appuient sur des informations calendaires telles que le jour de la semaine ou la date des vacances scolaires. Ces informations sont regroupées dans les historiques en classes hétérogènes. Par exemple, tous les lundis de la période scolaire sont regroupés dans une même classe et tous les lundis des vacances sont regroupés dans une autre classe. Un profil moyen est extrait de chacune de ces classes résumant les différentes situations observées en fonction des journées. Des procédés plus fins s'appuient intrinsèquement sur les données observées pour constituer les classes.

Quel que soit le procédé de construction de profils, l'observation des conditions réelles de trafic et des variables calendaires permet de se rapprocher du profil réel correspondant et de prévoir avec une bonne probabilité l'état du trafic futur à court, moyen ou long terme.

En fonction de ces données statistiques, il est utile de déterminer le plus court chemin entre deux points du réseau routier en considérant l'évolution du trafic en temps réel pendant le parcours, appelé le plus court chemin dépendant du temps ("time-dependent shortest path" en anglais). Cette détermination est théoriquement mise en oeuvre par l'algorithme de Dijkstra. En pratique, cependant, l'algorithme de Dijkstra est trop lent pour des applications en temps réel. Sur un très grand réseau routier représenté par de nombreux noeuds reliés entre eux par des arcs, par exemple d'une dizaine de millions de noeuds pour le réseau routier dans un pays comme la France, plusieurs secondes sont nécessaires pour déterminer un seul chemin.

L'objectif de l'invention est de réduire le temps de détermination d'un plus court chemin dépendant du temps.

Pour atteindre cet objectif, un procédé selon l'invention pour estimer le plus court chemin en temps de parcours dépendant d'un instant de départ donné entre un noeud source et un noeud de destination appartenant à un graphe orienté représentatif d'un

WO99/22205 décrit un procédé pour la détermination du plus court chemin, qui tient compte du trafic, dans lequel des chemins sont calculés entre les noeuds d'une région de départ et les noeuds d'une région d'arrivée. L'algorithme se centre sur la détermination d'une arête (ensemble de deux noeuds connectés) soit dans la région de départ, soit dans la région d'arrivée. Une fois déterminée cet arête est inclue dans le plus court chemin. réseau routier et recouvert de cellules contenant des noeuds du graphe et des arcs orientés entre les noeuds, chaque arc orienté étant associé à des temps de parcours prévisionnels évoluant dans le temps et dépendant d'historiques de mesures de trafic, est caractérisé en ce qu'il comprend :

un prétraitement du graphe orienté, en déterminant pour chaque couple d'une cellule de départ et d'une cellule d'arrivée, un sous-graphe contenant des noeuds et des arcs orientés entre lesdits noeuds formant des chemins reliant chacun l'un des noeuds contenus dans la cellule de départ vers l'un des noeuds contenus dans la cellule d'arrivée et ayant chacun un temps de parcours total inférieur à un seuil, et
une détermination du plus court chemin à l'instant de départ donné entre le noeud source et le noeud de destination, passant par des noeuds appartenant à l'un des sous-graphes précédemment déterminés relatif au couple de cellules dont la cellule de départ est telle qu'à l'instant de départ donné le chemin depuis le noeud source vers le noeud central de la cellule de départ est le plus court en temps de parcours comparativement à des chemins depuis le noeud source vers des noeuds centraux d'autres cellules, et la cellule d'arrivée contient le noeud de destination.

Les temps de parcours des chemins sont dépendant des temps de parcours prévisionnels des arcs orientés formant les chemins, ces temps de parcours prévisionnels évoluant dynamiquement au cours du temps.

Le prétraitement du procédé de l'invention a pour avantage d'augmenter la rapidité de détermination du plus court chemin entre un noeud source et un noeud de destination du graphe orienté en appliquant uniquement à un algorithme de détermination du plus court chemin un des sous-graphes déterminés lors du prétraitement relatif au couple de cellules de départ et d'arrivée. Le prétraitement diminue le temps de la détermination du plus court chemin puisque pour celle-ci tout le graphe orienté correspondant à l'ensemble du réseau routier n'est pas utilisé.

Selon une caractéristique de l'invention, pour déterminer un sous-graphe relatif à un couple d'une cellule de départ et d'une cellule d'arrivée, le seuil relatif à ce couple est défini en fonction du temps de parcours le plus court reliant un noeud central de la cellule de départ à un noeud central de la cellule d'arrivée, d'un temps de parcours le plus long des plus courts chemins reliant le noeud central de la cellule de départ à un des noeuds de la cellule de départ, et d'un temps de parcours le plus long des plus courts chemins reliant un des noeuds de la cellule d'arrivée au noeud central de la cellule d'arrivée. Pour déterminer le seuil, les temps de parcours utilisés correspondent à des bornes supérieures aux temps de parcours sur les arcs orientés. La taille de chaque sous-graphe est déterminée pendant la phase de prétraitement en fonction du seuil déterminé, et limite ainsi le nombre de noeuds à explorer pendant la détermination du plus court chemin entre le noeud source et le noeud de destination. Le temps maximal de détermination d'un plus court chemin entre un noeud source et un noeud de destination peut être estimé à partir de cette limitation.

Pour circonscrire le noeud source à une seule cellule, dite cellule de départ, plusieurs cellules pouvant se chevaucher et ainsi contenir le noeud source, la détermination du plus court chemin entre le noeud source et le noeud de destination peut comprendre une détermination, parmi toutes les cellules du graphe, de la cellule de départ dont le plus court chemin depuis le noeud source vers le noeud central de la cellule de départ a un temps de parcours le plus court comparativement à des temps de parcours de chemins depuis le noeud source vers des noeuds centraux des autres cellules du graphe à l'instant de départ donné.

L'invention a aussi pour objet un dispositif d'estimation pour estimer le plus court chemin en temps de parcours dépendant d'un instant de départ donné entre un noeud source et un noeud de destination appartenant à un graphe orienté représentatif d'un réseau routier et recouvert de cellules contenant des noeuds du graphe et des arcs orientés entre les noeuds, chaque arc orienté étant associé à des temps de parcours prévisionnels évoluant dans le temps et dépendant d'historiques de mesures de trafic. Le dispositif est caractérisé en ce qu'il comprend,
un moyen pour exécuter un prétraitement du graphe orienté, en déterminant pour chaque couple d'une cellule de départ et d'une cellule d'arrivée, un sous-graphe contenant des noeuds et des arcs orientés entre lesdits noeuds formant des chemins reliant chacun l'un des noeuds contenus dans la cellule de départ vers l'un des noeuds contenus dans la cellule d'arrivée et ayant chacun un temps de parcours total inférieur à un seuil, et
un moyen pour déterminer le plus court chemin à l'instant de départ donné entre le noeud source et le noeud de destination, passant par des noeuds appartenant à l'un des sous-graphes précédemment déterminés relatif au couple de cellules dont la cellule de départ est telle qu'à l'instant de départ donné le chemin depuis le noeud source vers le noeud central de la cellule de départ est le plus court en temps de parcours comparativement à des chemins depuis le noeud source vers des noeuds centraux d'autres cellules, et la cellule d'arrivée contient le noeud de destination.

Enfin, l'invention se rapporte à un programme d'ordinateur apte à être mis en oeuvre dans un dispositif informatique tel que le dispositif d'estimation de plus court chemin dépendant du temps de parcours selon l'invention. Le programme comporte des instructions qui, lorsque le programme est exécuté dans ledit dispositif, réalisent les étapes conformes au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un bloc-diagramme schématique d'un dispositif d'estimation du plus court chemin selon l'invention ;
- la figure 2 est un graphe d'arcs et de noeuds respectivement associés aux tronçons d'un réseau routier ;
- les figures 3 et 4 sont des algorithmes relatifs à un prétraitement inclus dans le procédé selon l'invention ; et
- la figure 5 est un algorithme relatif à une détermination du plus court chemin dépendant du temps entre deux intersections du réseau routier, inclue dans le procédé de l'invention.

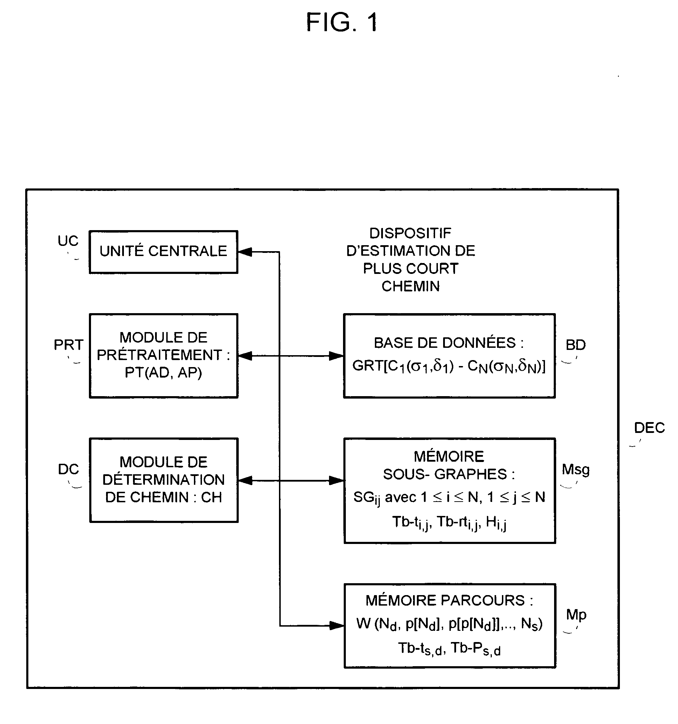

Comme montré à la figure 1, un dispositif d'estimation de plus court chemin DEC dans un réseau routier selon l'invention comprend une unité centrale de traitement UC, un module de prétraitement PRT, un module de détermination de plus court chemin DC, une base de données BD, une mémoire de sous-graphes Msg et une mémoire de parcours Mp.

Le dispositif d'estimation de plus court chemin DEC selon l'invention est par exemple inclus dans un ordinateur personnel ou un serveur. Les blocs fonctionnels du dispositif DEC représentés à la figure 1 assurent des fonctions ayant un lien avec l'invention et peuvent correspondre à des modules logiciels et/ou matériels.

Selon une réalisation, le dispositif DEC est inclus dans ou relié à un système de navigation routière par exemple à bord d'un véhicule ou inclus dans des terminaux de radiocommunication portables, comme des assistants numériques personnels communicants PDA (smartphones) ou des assistants numériques de navigation, pour déterminer des itinéraires dans le réseau routier. Le dispositif DEC reçoit périodiquement des informations de trafic mesurées et relevées par des équipements de mesure ou diffusées par un serveur, et comprenant des informations prévisionnelles, telles que des informations calendaires, déterminées à partir de traitements sur des relevés permanents provenant des équipements de mesure de trafic sur le terrain, classées et mises à jour dans des historiques de mesures et exprimant des conditions de circulation sur des tronçons du réseau routier.

L'unité centrale de traitement UC, telle qu'un processeur, contrôle l'exécution du procédé en activant et désactivant le module de prétraitement PTR et le module de détermination de chemin DC, et est reliée aux ou intègre les composants précités dans le dispositif.

La base de données BD est liée au dispositif DEC, c'est-à-dire elle est soit intégrée dans le dispositif DEC, soit incorporée dans un serveur de gestion de base de données et reliée au dispositif DEC par une liaison locale ou distante. La base de données BD comprend notamment des informations nécessaires au fonctionnement du dispositif DEC de l'invention telles que des informations prévisionnelles classées dans des historiques de mesures, et des données cartographiques du réseau routier caractérisant un graphe d'arcs orientés GRT représentant le réseau routier, défini ci-après.

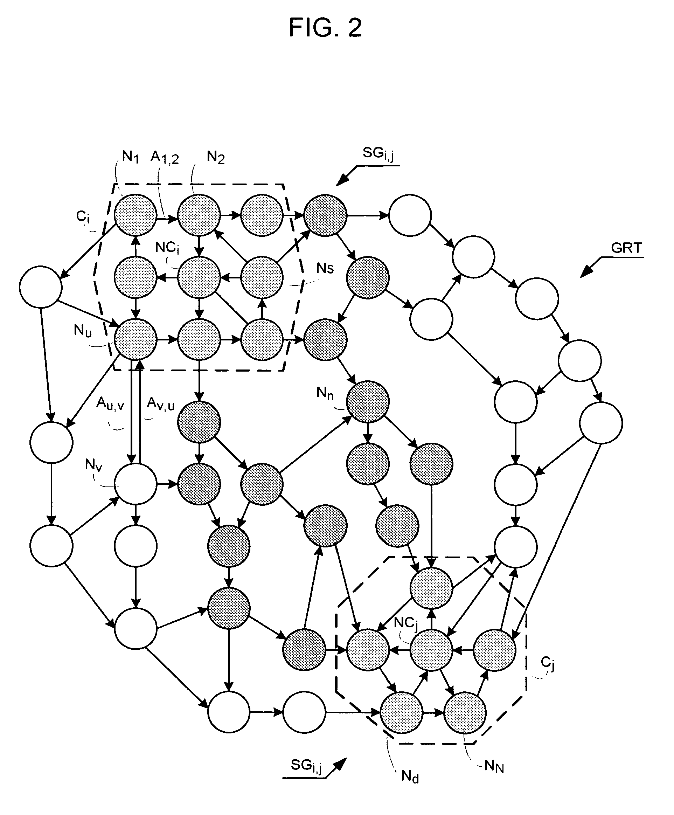

En référence à la figure 2, un réseau routier est représenté formellement dans la base de données BD pour son traitement dans le dispositif DEC sous la forme d'un graphe orienté GRT(N, A, Fc) comportant un ensemble N de noeuds avec $|N|$ noeuds, un ensemble A d'arcs orientés avec $|A|$ arcs orientés et une fonction Fc qui associe, pour chaque arc et pour chaque instant donné, un temps de parcours prévisionnel. Un instant donné correspond par exemple à une heure spécifique d'un jour précis : un lundi à 8 heure ou un jeudi à 14 heure. Chaque noeud est désigné par un identificateur et chaque arc est désigné par un identificateur. Un noeud $N_n$, avec $1 \leq n \leq |N|$, représente une intersection à la jonction de deux ou plusieurs tronçons du réseau routier. Les intersections de routes et de rues telles que carrefours, échangeurs et bifurcations sont représentées par des noeuds. Un arc orienté $A_{1,2}$ représente un sens de circulation sur un tronçon routier respectif s'étendant entre deux noeuds $N_1$ et $N_2$. Une route à double sens, considérée comme un tronçon entre deux noeuds, par exemple les noeuds $N_u$ et $N_v$, est représentée par un premier arc $A_{u,v}$ orienté depuis le noeud $N_u$ vers le noeud $N_v$, et par un deuxième arc $A_{v,u}$ orienté depuis le noeud $N_v$ vers le noeud $N_u$.

La fonction Fc, telle qu'une fonction sinusoïdale, a une valeur variant au cours du temps représentative de profils de temps de parcours prévisionnels pour chaque tronçon correspondant à chaque arc orienté du graphe et selon chaque instant donné. A chaque arc et selon un instant donné est associée aussi une borne inférieure $B_{inf}$ et une borne supérieure $B_{sup}$ à la fonction Fc, correspondant respectivement à un temps de parcours prévisionnel minimal et un temps de parcours prévisionnel maximal sur le tronçon, déduits notamment du rapport de la longueur du tronçon routier associé à l'arc sur respectivement des vitesses de circulation prévisionnelles minimale et maximale pour parcourir le tronçon. Les valeurs liées à la fonction Fc et aux bornes $B_{inf}$ et $B_{sup}$ sont déduites notamment des informations prévisionnelles évoluant dynamiquement au cours du temps en fonction du trafic routier, classées dans des historiques de mesures du trafic routier et mémorisées dans la base de données. Chaque arc est alors associé à des temps de parcours prévisionnels différents sur un même tronçon selon respectivement des instants donnés et en dépendance des historiques de mesures de trafic.

Le graphe GRT est divisé en cellules $C_1$ à $C_c$ pouvant se chevaucher et ainsi avoir un ou plusieurs noeuds en commun. Deux cellules Ci et Cj sont délimitées à la figure 1, avec $1 \leq i \leq C$ et $1 \leq j \leq C$. Chaque cellule, par exemple la cellule Ci, comprend un sous-ensemble de noeuds connectés dont un noeud central NCi différent de ceux des autres cellules. La cellule Ci est associée à deux temps de parcours respectifs $\delta_i$ et $\sigma_i$, correspondant respectivement au temps de parcours du plus long des plus courts chemins depuis un noeud de la cellule Ci vers le noeud central NCi, et au temps de parcours du plus long des plus courts chemins depuis le noeud central NCi vers un noeud de la cellule Ci. Les temps de parcours $\delta_i$ et $\sigma_i$ sont prédéterminés de manière connue par application de l'algorithme de Dijkstra sur le graphe GRT(N, A, $B_{sup}$) dans lequel le poids de chaque arc orienté est déterminé en fonction de la borne supérieure $B_{sup}$ associée à chaque arc.

Le module de prétraitement PRT appliqué au graphe GRT détermine des sous-graphes $SG_{1,1}$-$SG_{1,C}$ à $SG_{C,1}$-$SG_{C,C}$ respectivement à partir de toutes les combinaisons de couples de cellules $C_1$ à $C_C$ du graphe GRT. Plus particulièrement, un sous-graphe SGi,j est déterminé à partir d'un couple de cellules $(C_i, C_j)$ formé d'une cellule de départ Ci et d'une cellule d'arrivée Cj, avec $1 \leq i \leq C$ et $1 \leq j \leq C$. Par exemple dans la figure 2, le sous-graphe $SG_{i,j}$ comporte les cellules Ci et Cj et les noeuds grisés.

Un premier algorithme AD dans le module de prétraitement PRT établit selon une méthode de Dijkstra connue, pour chaque couple de cellules (Ci, Cj) du graphe GRT une première table Tb-ti,j et une deuxième table temporaire Tb-rti,j. La première table, appelée table de temps de parcours Tb-ti,j, contient pour chaque noeud $N_n$, avec $1 \leq n \leq |N|$, le temps de parcours le plus court $t[N_n]$ d'un chemin depuis le noeud central NCi de la cellule de départ Ci vers le noeud $N_n$, déterminé à partir du graphe GRT(N, A, $B_{inf}$) dans lequel le poids de chaque arc orienté est déterminé en fonction de la borne inférieure $B_{inf}$ associée à chaque arc. La deuxième table temporaire, appelée table de temps de parcours inverse Tb-rti,j, contient pour chaque noeud $N_n$, avec $1 \leq n \leq N$, le temps de parcours le plus court $rt[N_n]$ d'un chemin depuis le noeud $N_n$ vers le noeud central NCj de la cellule d'arrivée $C_j$, déterminé à partir du graphe GRT(N, A, $B_{inf}$) dans lequel le poids de chaque arc orienté est déterminé en fonction de la borne inférieure $B_{inf}$ associée à chaque arc.

Le module de prétraitement PTR fait également appel à un algorithme de prétraitement AP qui détermine pour chaque couple de cellules (Ci, Cj) un sous-graphe associé SGi,j en fonction d'un seuil de temps de parcours $H_{i,j}$ déterminé à partir de la table de temps de parcours Tb-ti,j établie lors de l'exécution de l'algorithme AD.

Pour chaque couple de cellules (Ci, Cj), le sous-graphe SGi,j est mémorisé dans la mémoire de sous-graphes Msg en association à un identificateur du couple de cellules (Ci, Cj). La table de temps de parcours Tb-ti,j, la table de temps de parcours inverse Tb-rti,j et le seuil de temps de parcours Hi,j sont mémorisés temporairement dans la mémoire de sous-graphes Msg en association à un identificateur du couple de cellules (Ci, Cj) et sont supprimés de la mémoire Msg à la fin de l'exécution de l'algorithme de prétraitement AP. Dans chaque table Tb-t$_{i,j}$, Tb-rt$_{i,j}$, chaque temps de parcours t[N$_n$], rt[N$_n$], relatif à un noeud N$_n$ est enregistré en association à un identificateur du noeud N$_n$.

Le module de détermination de chemin DC comprend un algorithme de détermination de chemin CH qui estime le plus court chemin W, c'est-à-dire le chemin ayant le temps de parcours le plus court, entre un noeud source N$_s$ et un noeud de destination N$_d$ du graphe GRT, en s'appuyant, plus particulièrement, sur le sous-graphe associé au couple de cellules telles que la cellule d'arrivée contient le noeud N$_d$ et la cellule de départ est déterminée en fonction d'un instant de départ donné du chemin partant du noeud source N$_s$. Le noeud source N$_s$ n'est pas obligatoirement contenu dans la cellule de départ. Le plus court chemin déterminé W est mémorisé dans la mémoire de parcours Mp. Le module DC établit lors de l'exécution de l'algorithme CH, une première table de temps de parcours Tb-t$_{s,d}$ du chemin W à déterminer et qui contient les temps de parcours des noeuds explorés lors de l'exécution de l'algorithme CH.

Le module DC établit également une table de noeuds parents Tb-P$_{s,d}$ contenant les identificateurs des noeuds précédant chacun des noeuds appartenant au chemin déterminé W entre le noeud source N$_s$ et le noeud de destination N$_d$. Les identificateurs des noeuds parents appartenant au chemin W sont enregistrés dans la table Tb-P$_{s,d}$ en association aux identificateurs des noeuds du chemin W auxquels ils sont reliés par un arc orienté.

Le procédé d'estimation du plus court chemin dépendant du temps de parcours comprend un prétraitement PT exécuté par le module de prétraitement PRT facilitant l'exécution d'un algorithme de détermination du plus court chemin CH par le module de détermination DC.

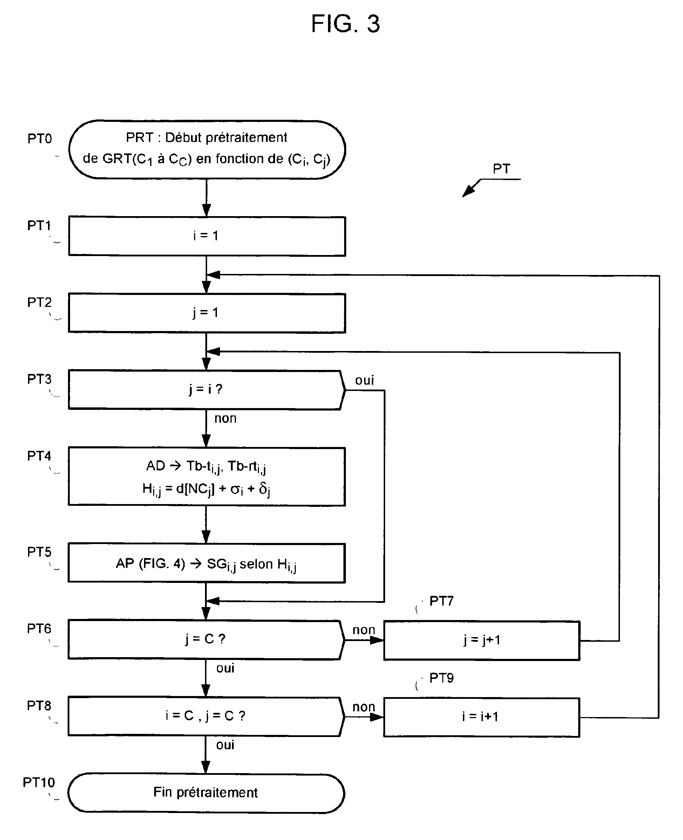

En référence à la figure 3, le prétraitement PT comprend des étapes PT0 à PT10, dont les étapes PT1 à PT3 et PT6 à PT9 correspondent à l'incrémentation de deux boucles imbriquées d'indice i et j, avec $1 \leq 1 \leq C$ et $1 \leq j \leq C$ et $i \pm j$, pour traiter toutes les combinaisons de couple de cellules Ci, Cj possibles.

Aux étapes PT1 et PT2 les indices i et j sont initialisés à 1. A l'étape PT6, si l'indice j n'est pas égal au nombre de cellules C du graphe GRT, alors il est incrémenté d'une unité à l'étape PT7 si l'indice incrémenté j est différent de l'indice i ; sinon il est incrémenté de deux unités aux étapes PT7 et PT3 lorsque l'indice j est égal à i-1 afin de ne pas exécuter le traitement d'un couple de deux mêmes cellules aux étapes PT4 et PT5. Si l'indice j est égal au nombre C à l'étape PT6 et si l'indice i n'a pas atteint C - 1 à l'étape PT8, l'indice i est incrémenté d'une unité à l'étape PT9 et l'indice j est réinitialisé à 1 à l'étape PT2. A l'étape PT8, si les deux indices i et j sont égaux respectivement à C, alors le prétraitement est terminé à l'étape PT10. Entre les boucles imbriquées, aux étapes PT4 et PT5, un traitement est exécuté sur le couple de cellules (Ci, Cj) identifié par la valeur des indices i et j.

Le module de prétraitement PTR exécute l'algorithme connu de Dijkstra AD à l'étape PT4, afin d'établir pour le couple de cellules (Ci, Cj) du graphe GRT la table de temps de parcours Tb-ti,j contenant pour chaque identificateur de noeud N$_n$ du graphe GRT le temps de parcours le plus court t[N$_n$] d'un chemin reliant le noeud central NCi de la cellule de départ Ci au noeud identifié N$_n$. Les temps de parcours t[N$_1$] à t[N$_N$] sont déterminés par application de l'algorithme de Dijkstra sur le graphe GRT(N, A, B$_{inf}$) dans lequel le poids de chaque arc mémorisé dans la base de données BD est déterminé en fonction de la borne inférieure B$_{inf}$ associée à chaque arc. Pour un noeud N$_n$ ne pouvant être relié par aucun chemin quel qu'il soit au noeud central NCi, le temps de parcours est égal à l'infini, soit t[N$_n$]=∞. Par exemple, le temps de parcours entre un noeud central de la cellule Ci se trouvant sur un continent à un noeud N$_n$ se trouvant sur une île ne peut être déterminé.

A l'étape PT4, après l'exécution de l'algorithme AD pour le couple de cellules (Ci, Cj), le module de prétraitement PTR détermine le seuil de temps de parcours H$_{i,j}$ :

$$H_{i,j} = st[NC_j] + \sigma_i + \delta_j,$$

avec

- st[NCj] le temps de parcours le plus court du chemin reliant le noeud central NCi de la cellule de départ Ci au noeud central NCj de la cellule d'arrivée Cj, st[NCj] étant déterminé par application de l'algorithme de Dijkstra AD sur le graphe GRT(N, A, B$_{sup}$) dans lequel le poids de chaque arc orienté a été déterminé en fonction de la borne supérieure B$_{sup}$ associée à chaque arc,
- $\sigma_i$ le temps de parcours le plus long des plus courts chemins reliant le noeud NCi à un des noeuds de la cellule Ci, prédéterminé à partir du graphe GRT(N, A, B$_{sup}$) dans lequel le poids de chaque arc orienté a été déterminé en fonction de la borne supérieure B$_{sup}$ associée à chaque arc, $\sigma_i$ étant mémorisé dans la base de données BD en association avec un identificateur de la cellule Ci, et
- $\delta_j$ le temps de parcours le plus long des plus courts chemins reliant un des noeuds de la cellule d'arrivée C$_j$ au noeud central NCj, prédéterminé à partir du graphe GRT(N, A, B$_{sup}$) dans lequel le poids de chaque arc orienté a été déterminé en fonction de la borne supérieure B$_{sup}$ associée à chaque arc, $\delta_j$ étant mémorisé dans la base de données BD en association avec un identificateur de la cellule d'arrivée $C_j$.

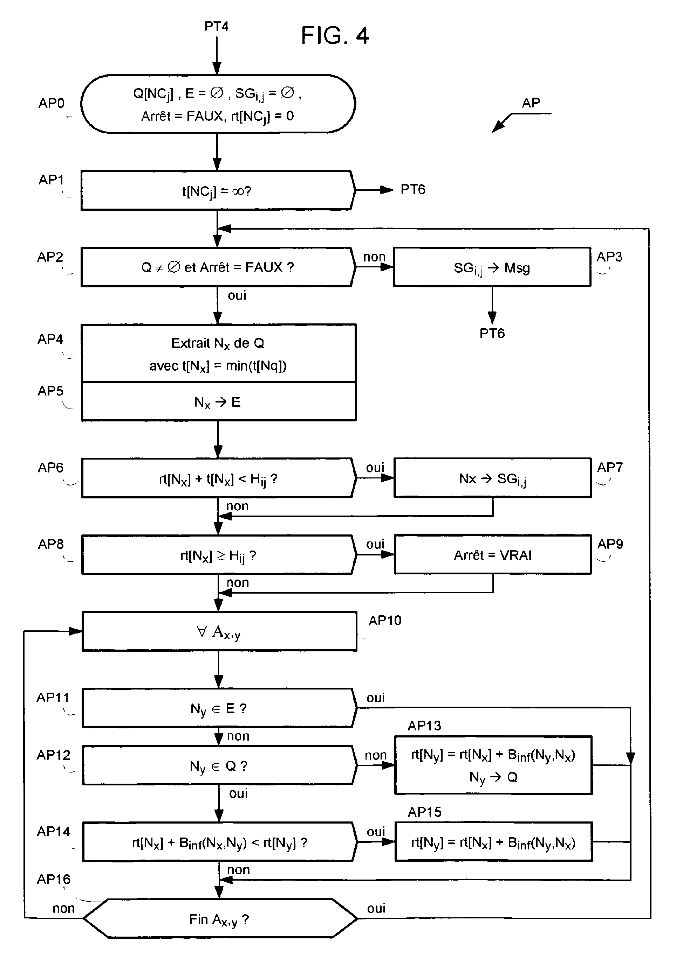

L'étape suivante PT5 est décrite plus en détail en référence à la figure 4 et détermine selon la table Tb-ti,j et selon le seuil de temps de parcours Hi,j précédemment déterminé, le sous-graphe SGi,j contenant tous les noeuds susceptibles d'être inclus lors de la détermination d'un plus court chemin reliant l'un des noeuds de la cellule de départ Ci à l'un des noeuds de la cellule d'arrivée Cj. La table de temps de parcours Tb-ti,j, la table de temps de parcours inverse Tb-rti,j et le seuil de temps de parcours Hi,j sont supprimés de la mémoire de sous-graphes Msg après l'exécution de l'étape PT5.

L'algorithme de prétraitement AP prend appui, pour certaines étapes, sur l'algorithme de Dijkstra et comprend des étapes AP0 à AP16.

Différents ensembles et paramètres interviennent lors de l'exécution de l'algorithme AP et sont notamment un ensemble Q de noeuds Nq qu'ils restent à explorer, avec $1 \leq q \leq |N|$, un ensemble E de noeuds explorés, un ensemble résultat $SG_{i,j}$ de noeuds qui appartiennent au sous-graphe à déterminer, et un paramètre Arrêt pour sortir d'une récurrence lorsque le seuil de temps de parcours $H_{i,j}$ est dépassé.

A l'étape AP0, l'ensemble Q ne comprend initialement que le noeud central NCj de la cellule d'arrivée Cj, les ensembles E et SGi,j sont vides, le paramètre Arrêt est à une valeur binaire FAUX, et le temps de parcours inverse rt [NCj] du noeud central NCj dans la table de temps de parcours inverse Tb-rt$_{i,j}$ est mis à zéro.

A l'étape AP1, le module de prétraitement PRT extrait de la table Tb-ti,j et analyse la valeur de temps de parcours le plus court t[NC$_j$] entre le noeud central NCi de la cellule de départ Ci et le noeud central NCj de la cellule d'arrivée Cj déterminée à partir du graphe GRT(N, A, B$_{inf}$). Si t[NC$_j$] = ∞, alors il n'existe pas de chemin reliant le noeud NCi au noeud NCj et le module de prétraitement PTR sort de l'algorithme AP vers l'étape PT5 (figure 3). A l'inverse si t[NC$_j$] ≠ ∞, alors le prétraitement continue à l'étape AP2.

L'étape AP2 est le début d'une première boucle de récurrence AP2-AP16 relative à l'exploration d'abord de noeuds, puis d'arcs. Tant que l'ensemble Q n'est pas vide et que le paramètre Arrêt n'est pas à la valeur binaire VRAI, le module PTR continue l'exécution de l'algorithme AP par l'étape AP4. A chaque étape AP4, le module PTR extrait de l'ensemble Q, un noeud $N_x$ dont le temps de parcours inverse rt[$N_x$] pour relier le noeud NCj au noeud $N_x$ est le plus petit des temps de parcours inverse rt[Nq] associés aux noeuds Nq appartenant à l'ensemble Q. Lors de la première itération de la première boucle de récurrence, le noeud $N_x$ correspond au seul noeud inclus dans l'ensemble Q, le noeud NCj.

Le module de prétraitement PTR insère le noeud $N_x$ dans l'ensemble des noeuds explorés E à l'étape AP5.

A l'étape AP6, le module PTR vérifie si la somme du temps de parcours inverse rt [$N_x$] entre le noeud $N_x$ et le noeud central NC$_j$ de la cellule d'arrivée C$_j$ et du temps de parcours t[$N_x$] entre le noeud central NCi de la cellule de départ Ci et le noeud $N_x$ est inférieure au seuil de temps de parcours $H_{i,j}$. Si rt [$N_x$] + t [$N_x$] < $H_{i,j}$, alors le noeud $N_x$ est inséré dans l'ensemble résultat $SG_{i,j}$ à l'étape AP7. Si rt[$N_x$] + t[$N_x$] ≥ $H_{i,j}$, à l'étape AP6, alors le noeud $N_x$ n'est pas inséré dans l'ensemble résultat $SG_{i,j}$.

A l'étape AP8, le module PTR vérifie si le temps de parcours inverse rt[$N_x$] reliant le noeud $N_x$ au noeud central NC$_j$ est supérieur au seuil de temps de parcours $H_{i,j}$. Si rt[$N_x$] ≥ $H_{i,j}$, alors le module PTR met le paramètre Arrêt à la valeur binaire VRAI, à l'étape AP9. Cette condition relative au seuil de temps de parcours $H_{i,j}$ limite l'algorithme AP au traitement des noeuds proches d'un possible chemin W à déterminer ultérieurement reliant l'un des noeuds de la cellule de départ Ci à l'un des noeuds de la cellule d'arrivée C$_j$. Si rt[$N_x$] < $H_{i,j}$, à l'étape AP6, le paramètre Arrêt reste à la valeur binaire FAUX.

Les étapes AP10 à AP16 correspondent à une deuxième boucle de récurrence qui est incluse dans la première boucle de récurrence et au cours de laquelle le module de prétraitement PTR traite tous les arcs qui relient le noeud $N_x$ à un autre noeud $N_y$, avec $1 \leq y \leq |N|$.

A l'étape AP11, pour un arc $A_{x,y}$, si le noeud $N_y$ appartient à l'ensemble des noeuds explorés E, le module PTR traite un autre arc ayant pour origine le noeud $N_x$ en exécutant l'étape AP16, un noeud appartenant à l'ensemble E étant considéré comme exploré par le module PTR. A l'étape AP11, si le noeud Ny n'appartient pas à l'ensemble E, le module PTR exécute l'étape AP12.

A l'étape AP12, si le noeud $N_y$ n'appartient pas à l'ensemble Q, le module PTR détermine, à l'étape AP13, le temps de parcours inverse le plus court rt[$N_y$] reliant le noeud $N_y$ au noeud central NCj selon l'addition suivante :

$$\mathrm{rt}[N_y] = \mathrm{rt}[N_x] + B_{\mathrm{inf}}(N_x, N_y),$$

avec

- rt[$N_x$] le temps de parcours inverse le plus court reliant le noeud $N_x$ au noeud central NCj de la cellule d'arrivée Cj, et

- $B_{inf}(N_x, N_y)$ la borne inférieure de la fonction Fc et associée à l'arc $A_{x,y}$ définissant le temps de parcours prévisionnel minimal de l'arc $A_{x,y}$.

Le temps $rt[N_y]$ est enregistré par écrasement de la valeur précédente dans la table de temps de parcours inverse $Tb\text{-}rt_{i,j}$. Le module PRT insère, ensuite, le noeud $N_y$ dans l'ensemble Q des noeuds à explorer, l'ensemble Q comportant ainsi tous les noeuds reliés au noeud $N_x$ en cours d'exploration, qui n'ont pas encore été explorés.

En revenant à l'étape AP12, si le noeud $N_y$ appartient à l'ensemble Q, le module PRT compare la somme $rt[N_x]+B_{inf}(N_x,N_y)$ au temps de parcours inverse $rt[Ny]$ à l'étape AP14. Si la somme $rt[N_x]+B_{inf}(N_x,N_y)$ est strictement inférieure au temps de parcours inverse $rt[N_y]$ alors, à l'étape AP15, le temps de parcours $rt[N_y]$ est de nouveau déterminé de manière analogue à l'étape AP13 et enregistré par écrasement de l'ancienne valeur dans la table $Tb\text{-}rt_{i,j}$. En revanche, si $rt[N_x]+B_{inf}(N_x,N_y) \geq rt[N_y]$, la valeur du temps de parcours inverse $rt[N_y]$ n'est pas modifiée, et le module PTR exécute l'étape AP16, comme après l'étape AP13 ou AP15.

A l'étape AP16, si tous les arcs reliés au noeud $N_x$ n'ont pas été traités, le module PTR réitère les étapes AP11 à AP16 de la deuxième boucle de récurrence pour traiter un autre arc non traité ayant pour origine le noeud $N_x$. Si tous les arcs ayant pour origine le noeud $N_x$ ont été traités, le module PTR retourne à l'étape AP2 pour vérifier les conditions d'arrêt de la première boucle de récurrence.

A l'étape AP2, si tous les noeuds à explorer de l'ensemble Q ont été explorés ou si le paramètre Arrêt est à la valeur binaire VRAI, alors le module PTR exécute l'étape AP3 en mémorisant l'ensemble $SG_{i,j}$ considéré comme un sous-graphe dans la mémoire de sous-graphes Msg et sort de l'algorithme AP vers l'étape PT5.

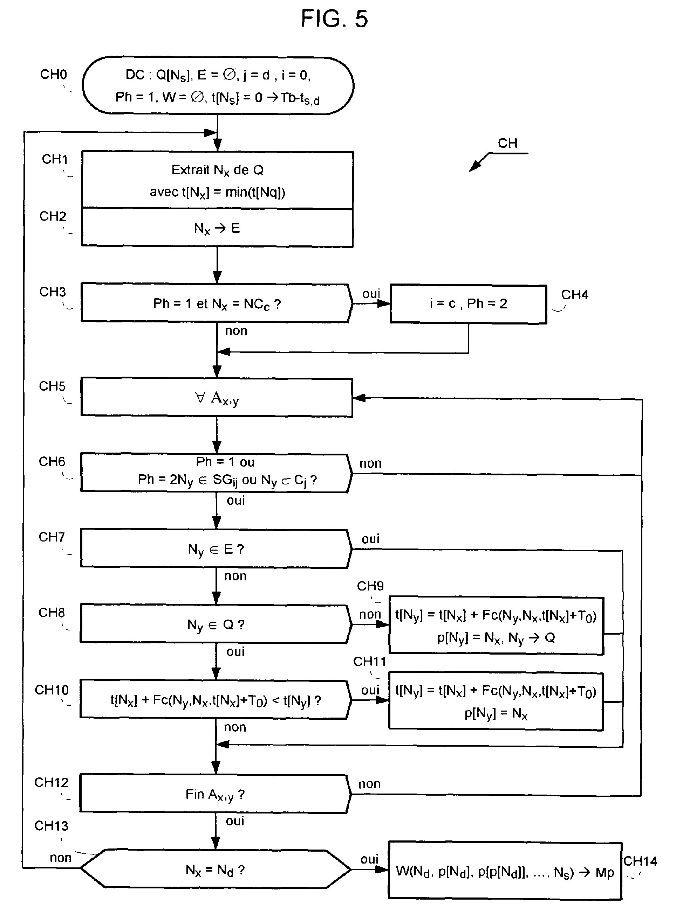

En référence à la figure 5, l'algorithme de détermination du plus court chemin CH entre un noeud source $N_s$ et un noeud de destination $N_d$ avec un instant de départ donné $T_0$ comprend des étapes CH0 à CH14 dont certaines reposent sur l'algorithme de Dijkstra ; cet algorithme est appliqué au graphe GRT(N, A, Fc).

L'algorithme CH comprend deux phases de traitement. Une première phase de traitement détermine la cellule de départ dont le chemin depuis le noeud source $N_s$ vers le noeud central de la cellule de départ à l'instant de départ donné To est le plus court, c'est-à-dire ayant le temps de parcours le plus court, comparativement à des temps de parcours de chemins depuis le noeud source $N_s$ vers des noeuds centraux d'autres cellules. La première phase de traitement en cours d'exécution est définie dans l'algorithme CH par un paramètre Ph égal à 1. Une fois que la cellule de départ est déterminée, le paramètre Ph passe à 2 pour déclencher une deuxième phase de traitement. Cette deuxième phase de traitement détermine le chemin W le plus court en temps entre le noeud source $N_s$ et le noeud de destination $N_d$ inclus dans le sous-graphe relatif au couple (cellule de départ, cellule d'arrivée dite cellule de destination ci-après), la cellule de destination $C_d$ étant connue initialement.

Un ensemble de noeuds restant à explorer Q et un ensemble de noeuds explorés E interviennent lors de l'exécution de l'algorithme CH et sont analogues aux ensembles E et Q définis précédemment pour l'algorithme de prétraitement AP.

A l'étape CH0, l'ensemble Q ne comprend initialement que le noeud source $N_s$, l'ensemble E est vide, un indice j est mis à la valeur de l'indice d'une cellule de destination $C_d$ incluant le noeud de destination $N_d$, un indice i correspondant à l'indice d'une cellule de départ est initialement mis à zéro, et le paramètre Ph définissant la phase de traitement de l'algorithme CH est initialement mis à 1. Un ensemble ordonné résultat W considéré comme le chemin à déterminer entre le noeud source $N_s$ et le noeud de destination $N_d$ est initialement vide. Une table de temps de parcours $Tb\text{-}t_{s,d}$ est créée dans la mémoire Mp et contient progressivement les temps de parcours des différents noeuds explorés pendant l'exécution de l'algorithme CH, ces temps de parcours étant enregistrés en association avec les identificateurs respectifs des noeuds explorés. Initialement, la table $Tb\text{-}t_{s,d}$ contient un premier temps de parcours $t[N_s]$ nul associé à l'identificateur du noeud source $N_s$.

Lors de la première phase de traitement avec Ph = 1, à l'étape CH1 qui est au début d'une première boucle de récurrence CH1-CH13 relative à l'exploration de noeuds, puis d'arcs, le module DC extrait de l'ensemble Q, un noeud $N_x$ dont le temps de parcours $t[N_x]$ pour relier le noeud $N_s$ au noeud $N_x$ à l'instant de départ donné To est le plus petit des temps de parcours $t[Nq]$ associés aux noeuds Nq appartenant à l'ensemble Q. Lors de la première itération de la première boucle de récurrence, le noeud $N_x$ correspond au seul noeud inclut dans l'ensemble Q, le noeud $N_s$.

Le module DC insère le noeud $N_x$ dans l'ensemble des noeuds explorés E à l'étape CH2.

A l'étape CH3, le module DC compare l'identificateur du noeud $N_x$ extrait à l'identificateur d'un noeud central $NC_c$ d'une cellule $C_c$ lu dans la base de données BD. Si les deux identificateurs ne correspondent pas, le module DC entre à l'étape CH5 dans une deuxième boucle de récurrence CH5-CH12 qui est incluse dans la première boucle de récurrence et dans laquelle le module DC traite tous les arcs reliant le noeud $N_x$ à un autre noeud Ny, avec $1 \leq y \leq |N|$.

A l'étape CH6, le module DC vérifie notamment si le paramètre Ph est égal à 1, ou vérifie d'autres condition si Ph est égal à 2, qui seront présentées en référence à la deuxième phase de traitement.

A l'étape CH7, pour un arc $A_{x,y}$, si le noeud $N_y$ appartient à l'ensemble des noeuds explorés E, le module DC traite un autre arc ayant pour origine le noeud $N_x$ en exécutant l'étape CH12, un noeud appartenant à l'ensemble E étant considéré comme déjà exploré. A l'étape CH7, si le noeud $N_y$ n'appartient pas à l'ensemble E, le module DC exécute l'étape CH8.

A l'étape CH8, si le noeud $N_y$ n'appartient pas à l'ensemble Q, le module DC détermine, à l'étape CH9, le temps de parcours le plus court $t[N_y]$ reliant le noeud $N_y$ au noeud source $N_s$ par l'addition suivante :

$$t[N_y] = t[N_x] + Fc(N_x, N_y, t[N_x] + T_0),$$

avec

- $t[N_x]$ le temps de parcours le plus court reliant le noeud $N_s$ au noeud $N_x$, et
- $Fc(N_x, N_y, t[N_x] + T_0)$ la fonction Fc associée à l'arc $A_{x,y}$ définissant le temps de parcours prévisionnel de l'arc $A_{x,y}$ à l'instant $t[N_x] + T_0$.

Le temps $t[N_y]$ est enregistré dans la table de temps de parcours $Tb\text{-}t_{s,d}$ en association avec l'identificateur du noeud $N_y$. Le module DC insère, ensuite, le noeud $N_y$ dans l'ensemble Q des noeuds à explorer. Le module DC enregistre dans la table de noeud parent $Tb\text{-}P_{s,d}$ l'identificateur du noeud Ny en association à l'identificateur du noeud Nx, le noeud Ny étant considéré comme le noeud parent du noeud Nx dans le chemin W.

En revenant à l'étape CH8, si le noeud $N_y$ appartient à l'ensemble Q, le module DC compare la somme $t[N_x] + Fc(N_x, N_y, t[N_x] + T_0)$ au temps de parcours $t[N_y]$ à l'étape CH10. Si la somme $t[N_x] + Fc(N_x, N_y, t[N_x] + T_0)$ est strictement inférieure au temps de parcours $t[N_y]$ alors, à l'étape CH11, le temps de parcours $t[N_y]$ est de nouveau déterminé de manière analogue à l'étape CH9 et enregistré par écrasement de l'ancienne valeur dans la table $Tb\text{-}t_{s,d}$. En revanche, si $t[N_x] + Fc(N_x, N_y, t[N_x] + T_0) \geq t[Ny]$, la valeur du temps de parcours $t[N_y]$ n'est pas modifiée. Le module DC enregistre dans la table de noeud parent $tb\text{-}P_{s,d}$ l'identificateur du noeud $N_y$ en association à l'identificateur du noeud $N_x$, le noeud $N_y$ étant considéré comme le noeud parent du noeud $N_x$ dans le chemin W. Si un autre noeud a été identifié précédemment comme noeud parent, le module DC supprime de la table $tb\text{-}P_{s,d}$, l'identificateur dudit noeud parent en association à l'identificateur du noeud $N_x$.

A l'étape CH12 succédant à l'étape CH7, CH9, CH10, ou CH11, si tous les arcs reliés au noeud $N_x$ n'ont pas été traités, le module DC réitère les étapes CH6 à CH12 de la deuxième boucle de récurrence pour traiter un autre arc partant du noeud $N_x$. Si tous les arcs ayant pour origine le noeud $N_x$ ont été traités, le module DC exécute l'étape CH13 pour vérifier si l'identificateur du noeud extrait $N_x$ est identique à l'identificateur du noeud de destination $N_d$. Si $N_x \neq N_d$, alors le module DC retourne à l'étape CH1, afin d'extraire un autre noeud à explorer de l'ensemble Q.

De retour à l'étape CH3, toujours dans la première phase de traitement Ph = 1, si l'identificateur du noeud $N_x$ extrait est identique à l'identificateur d'un noeud central $NC_C$ d'une cellule $C_c$, alors l'indice i prend la valeur de l'indice de la cellule $C_c$, avec $1 \leq c \leq C$, et le paramètre Ph est mis à 2, à l'étape CH4. La cellule $C_c$ est considérée comme la cellule de départ et le module DC sort de la première phase de traitement pour déclencher la deuxième phase de traitement comprenant une détermination du plus court chemin en temps entre le noeud source $N_s$ proche du noeud central de la cellule de départ Ci et le noeud de destination $N_d$ de la cellule de destination $C_j$ sur la base du sous-graphe SGi,j relatif au deux cellules Ci et Cj, prédéterminé lors du prétraitement PT et mémorisé dans la mémoire de sous-programme Msg.

Lors de la deuxième phase de traitement pour Ph = 2, les étapes CH3 et CH4 ne sont plus sollicitées. Les autres étapes CH7 à CH12 sont exécutées comme décrites précédemment, si à l'étape CH6, le noeud $N_y$ appartient à l'ensemble $SG_{i,j}$ considéré comme le sous-graphe relatif au couple (cellule de départ, cellule de destination), ou si le noeud $N_y$ est inclus dans la cellule de destination $C_j$.

Si l'une ou l'autre condition précédente n'est pas satisfaite, le module DC réitère les étapes CH6 à CH12 de la deuxième boucle de récurrence pour traiter un autre arc ayant pour origine le noeud $N_x$.

A l'étape CH13, si l'identificateur du noeud extrait $N_x$ est identique à l'identificateur du noeud de destination $N_d$, le module DC détermine à partir de la table parent le chemin le plus court en écrivant dans l'ensemble W les identificateurs des noeuds du chemin en débutant par l'identificateur du noeud de destination $N_d$. Le module DC recherche en premier, dans la table $Tb\text{-}P_{s,d}$, l'identificateur du noeud parent $p[N_d]$ du noeud de destination $N_d$ pour l'écrire dans l'ensemble ordonné W à la suite de l'identificateur du noeud de destination $N_d$, puis recherche l'identificateur du noeud parent $p[p[N_d]]$ du noeud précédemment écrit $p[N_d]$ dans l'ensemble W et ainsi de suite, jusqu'à l'écriture de l'identificateur du noeud source $N_s$ dans l'ensemble W. L'ensemble W est mémorisé dans la mémoire de parcours Mp.

L'invention décrite ici concerne un procédé et un dispositif d'estimation du plus court chemin en temps de parcours dépendant d'un instant de départ donné entre un noeud source et un noeud destination. Selon une implémentation, les étapes du procédé de l'invention sont déterminées par les instructions d'un programme d'ordinateur incorporé dans un dispositif informatique tel que le dispositif d'estimation de plus court chemin DEC. Le programme comporte des instructions de programme qui, lorsque ledit programme est exécuté dans un processeur du dispositif dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'informations lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

**Revendications**

1. Procédé pour estimer le plus court chemin (W) en temps de parcours dépendant d'un instant de départ donné ($T_0$) entre un noeud source ($N_s$) et un noeud de destination ($N_d$) appartenant à un graphe orienté (GRT) représentatif d'un réseau routier et recouvert de cellules ($C_1$-$C_C$) contenant des noeuds ($N_1$-$N_N$) du graphe et des arcs orientés ($A_{u,v}$) entre les noeuds, chaque arc orienté étant associé à des temps de parcours prévisionnels évoluant dans le temps et dépendant d'historiques de mesures de trafic, **caractérisé en ce qu'**il comprend :

   un prétraitement (PT-AP) du graphe orienté, en déterminant pour chaque couple d'une cellule de départ (Ci) et d'une cellule d'arrivée ($C_j$), un sous-graphe ($SG_{i,j}$) contenant des noeuds et des arcs orientés entre lesdits noeuds formant des chemins reliant chacun l'un des noeuds contenus dans la cellule de départ vers l'un des noeuds contenus dans la cellule d'arrivée et ayant chacun un temps de parcours total inférieur à un seuil ($H_{i,j}$), et une détermination (CH) du plus court chemin à l'instant de départ donné entre le noeud source et le noeud de destination, passant par des noeuds appartenant à l'un des sous-graphes précédemment déterminés relatif au couple de cellules dont la cellule de départ est telle qu'à l'instant de départ donné le chemin depuis le noeud source vers le noeud central de la cellule de départ est le plus court en temps de parcours comparativement à des chemins depuis le noeud source vers des noeuds centraux d'autres cellules, et la cellule d'arrivée contient le noeud de destination, le chemin déterminé étant le chemin le plus court en temps entre le noeud source et le noeud de destination inclus dans ledit un des sous-graphes.

2. Procédé conforme à la revendication 1, selon lequel le seuil ($H_{i,j}$) relatif à un couple d'une cellule de départ (Ci) et d'une cellule d'arrivée (Cj) est défini en fonction du temps de parcours le plus court (st[NCj]) reliant un noeud central (NCi) de la cellule de départ à un noeud central (NCj) de la cellule d'arrivée, d'un temps de parcours ($\sigma_i$) le plus long des plus courts chemins reliant le noeud central de la cellule de départ à un des noeuds de la cellule de départ, et d'un temps de parcours ($\delta_j$) le plus long des plus courts chemins reliant un des noeuds de la cellule d'arrivée au noeud central de la cellule d'arrivée.

3. Procédé conforme à la revendication 1 ou 2, selon lequel la détermination (CH) du plus court chemin (W) entre le noeud source ($N_s$) et le noeud de destination ($N_d$) comprend une détermination (CH2-CH13, Ph = 1) de la cellule de départ (Ci) dont le plus court chemin depuis le noeud source vers le noeud central de la cellule de départ a un temps de parcours le plus court comparativement à des temps de parcours de chemins depuis le noeud source vers des noeuds centraux des autres cellules du graphe à l'instant de départ donné ($T_0$).

4. Dispositif d'estimation (DEC) pour estimer le plus court chemin (W) en temps de parcours dépendant d'un instant de départ donné ($T_0$) entre un noeud source ($N_s$) et un noeud de destination ($N_d$) appartenant à un graphe orienté (GRT) représentatif d'un réseau routier et recouvert de cellules ($C_1$-$C_C$) contenant des noeuds ($N_1$-$N_N$) du graphe et des arcs orientés ($A_{u,v}$) entre les noeuds, chaque arc orienté étant associé à des temps de parcours prévisionnels évoluant dans le temps et dépendant d'historiques de mesures de trafic, **caractérisé en ce qu'**il comprend :

   un moyen (PTR) pour exécuter un prétraitement du graphe orienté, en déterminant pour chaque couple d'une cellule de départ (Ci) et d'une cellule d'arrivée ($C_j$), un sous-graphe ($SG_{i,j}$) contenant des noeuds et des arcs orientés entre lesdits noeuds formant des chemins reliant chacun l'un des noeuds contenus dans la cellule de départ vers l'un des noeuds contenus dans la cellule d'arrivée et ayant chacun un temps de parcours total inférieur à un seuil ($H_{i,j}$), et

un moyen (DC) pour déterminer le plus court chemin à l'instant de départ donné entre le noeud source et le noeud de destination, passant par des noeuds appartenant à l'un des sous-graphes précédemment déterminés relatif au couple de cellules dont la cellule de départ est telle qu'à l'instant de départ donné le chemin depuis le noeud source vers le noeud central de la cellule de départ est le plus court en temps de parcours comparativement à des chemins depuis le noeud source vers des noeuds centraux d'autres cellules, et la cellule d'arrivée contient le noeud de destination, le chemin déterminé étant le chemin le plus court en temps entre le noeud source et le noeud de destination inclus dans ledit un des sous-graphes.

**5.** Programme d'ordinateur apte à être mis en oeuvre dans un dispositif informatique (DEC) et destiné à estimer le plus court chemin (W) en temps de parcours dépendant d'un instant de départ donné ($T_0$) entre un noeud source ($N_s$) et un noeud de destination ($N_d$) appartenant à un graphe orienté (GRT) représentatif d'un réseau routier et recouvert de cellules ($C_1$-$C_C$) contenant des noeuds ($N_1$-$N_N$) du graphe et des arcs orientés ($A_{u,v}$) entre les noeuds, chaque arc orienté étant associé à des temps de parcours prévisionnels évoluant dans le temps et dépendant d'historiques de mesures de trafic, ledit programme étant **caractérisé en ce qu'**il comprend des instructions qui, lorsque le programme est exécuté dans ledit dispositif, réalisent le prétraitement (PT-AP) et la détermination (CH) du procédé selon l'une des revendications 1 à 3.

## Claims

**1.** Method for estimating the path (W) having the shortest traversal time, based on a given start time (To), between a source node ($N_s$) and a target node ($N_d$) of a directed graph (GRT) which represents a road network and is covered with cells ($C_1$-$C_C$) comprising nodes ($N_1$-$N_N$) of the graph and directed edges ($A_{u,v}$) between the nodes, each directed edge being associated with predicted traversal times which change over time and are dependent on traffic measurement records, **characterised in that** it comprises:

pretreating (PT-AP) the directed graph by determining, for each pair formed by a start cell ($C_i$) and an end cell ($C_j$), a subgraph ($SG_{i,j}$) comprising nodes and directed edges between said nodes forming paths which each connect one of the nodes comprised in the start cell to one of the nodes comprised in the end cell and each have a total traversal time below a threshold ($H_{i,j}$), and
determining (CH) the shortest path, at the given start time, between the source node and the target node, passing through nodes of one of the subgraphs previously determined in relation to the pair of cells, of which the start cell is such that, at the given start time, the path from the source node to the central node of the start cell has the shortest traversal time by comparison with paths from the source node to central nodes of other cells, and the end cell comprises the target node, the determined path being the path having the shortest time between the source node and the target node included in said one of the subgraphs.

**2.** Method according to claim 1, wherein the threshold ($H_{i,j}$) relating to a pair formed by a start cell ($C_i$) and an end cell ($C_j$) is defined as a function of the shortest traversal time ($st[NC_j]$) between a central node ($NC_i$) of the start cell and a central node ($NC_j$) of the end cell, a longest traversal time ($\sigma_i$) from among the shortest paths which connect the central node of the start cell to one of the nodes of the end cell, and a longest traversal time ($\delta_j$) from among the shortest paths which connect one of the nodes of the start cell to the central node of the end cell.

**3.** Method according to either claim 1 or claim 2, wherein determining (CH) the shortest path (W) between the source node ($N_s$) and the target node ($N_d$) comprises determining (CH2-CH13, Ph=1) the end cell ($C_i$) for which the shortest path from the source node to the central node of the end cell has the shortest traversal time by comparison with traversal times of paths from the source node to central nodes of the other cells of the graph at the given start time (To).

**4.** Estimation device (DEC) for estimating the path (W) having the shortest traversal time, based on a given start time (To), between a source node ($N_s$) and a target node ($N_d$) of a directed graph (GRT) which represents a road network and is covered with cells ($C_1$-$C_c$) comprising nodes ($N_i$-$N_N$) of the graph and directed edges ($A_{u,v}$) between the nodes, each directed edge being associated with predicted traversal times which change over time and are dependent on traffic measurement records, **characterised in that** it comprises:

a means (PTR) for pretreating the directed graph by determining, for each pair formed by a start cell ($C_i$) and an end cell ($C_j$), a subgraph ($SG_{i,j}$) comprising nodes and directed edges between said nodes forming paths which each connect one of the nodes comprised in the start cell to one of the nodes comprised in the end cell and each have a total traversal time below a threshold ($H_{i,j}$), and

a means (DC) for determining the shortest path, at the given start time, between the source node and the target node, passing through nodes of one of the subgraphs previously determined in relation to the pair of cells, of which the start cell is such that, at the given start time, the path from the source node to the central node of the start cell has the shortest traversal time by comparison with paths from the source node to central nodes of other cells, and the end cell comprises the target node, the determined path being the path having the shortest time between the source node and the target node included in said one of the subgraphs.

**5.** Computer program, adapted for implementation on a computing device (DEC), for estimating the path (W) having the shortest traversal time, based on a given start time ($T_0$), between a source node ($N_s$) and a target node ($N_d$) of a directed graph (GRT) which represents a road network and is covered with cells ($C_1$-$C_c$) comprising nodes ($N_1$-$N_N$) of the graph and directed edges ($A_{u,v}$) between the nodes, each directed edge being associated with predicted traversal times which change over time and are dependent on traffic measurement records, said program being **characterised in that** it comprises instructions which carry out the pretreatment (PT-AP) and determination (CH) in accordance with the method according to any one of claims 1 to 3 when the program is executed on said device.

**Patentansprüche**

**1.** Verfahren zur Abschätzung der von der Fahrtzeit her kürzesten Strecke (W) in Abhängigkeit von einem gegebenen Abfahrtszeitpunkt ($T_0$) zwischen einem Quellknoten ($N_s$) und einem Zielknoten ($N_d$), die einem gerichteten Graphen (GRT) zugehörig sind, der für ein Straßennetz repräsentativ ist und von Zellen ($C_1$-$C_c$) bedeckt ist, die Knoten ($N_1$-$N_N$) des Graphen und gerichtete Bögen ($A_{u,v}$) zwischen den Knoten enthalten, wobei jeder gerichtete Bogen voraussichtlichen Fahrtzeiten zugeordnet ist, die sich in der Zeit verändern und von Verkehrsmessungshistorien abhängen, **dadurch gekennzeichnet, dass** es Folgendes umfasst:

- eine Vorauswertung (PT-AP) des gerichteten Graphen, indem für jedes Paar aus einer Abfahrtszelle ($C_i$) und einer Ankunftszelle ($C_j$) ein Teilgraph ($SG_{i,j}$) ermittelt wird, der Knoten und gerichtete Bögen zwischen den Knoten enthält, welche die Strecken bilden, die jeweils einen der Knoten, die in der Abfahrtszelle enthalten sind, zu einem der Knoten, die in der Ankunftszelle enthalten sind, verbinden und jeweils eine Gesamtfahrtzeit aufweisen, die kleiner als ein Schwellwert ($H_{i,j}$) ist, und

- eine Ermittlung (CH) der kürzesten Strecke zu dem gegebenen Abfahrtszeitpunkt zwischen dem Quellknoten und dem Zielknoten, die durch Knoten, die einem der zuvor für ein Zellenpaar ermittelten Teilgraphen zugehörig sind, verläuft, wobei die Abfahrtszelle des Paares dergestalt ist, dass zu dem gegebenen Abfahrtszeitpunkt die Strecke von dem Quellknoten zu dem zentralen Knoten der Abfahrtszelle im Vergleich zu Strecken von dem Quellknoten zu den zentralen Knoten anderer Zellen von der Fahrtzeit her am kürzesten ist, und die Ankunftszelle des Paares den Zielknoten enthält, wobei die ermittelte Strecke die von der Zeit her kürzeste Strecke zwischen dem Quellknoten und dem Zielknoten ist, die in dem einen der Teilgraphen enthalten sind.

**2.** Verfahren nach Anspruch 1, wobei der Schwellwert ($H_{i,j}$) für ein Paar aus einer Abfahrtszelle ($C_i$) und einer Ankunftszelle ($C_j$) in Abhängigkeit von der kürzesten Fahrtzeit ($st[NC_j]$) zwischen einem zentralen Knoten ($NC_i$) der Abfahrtszelle mit einem zentralen Knoten ($NC_j$) der Ankunftszelle, von einer längsten Fahrtzeit ($\sigma_i$) der kürzesten Strecken, die den zentralen Knoten der Abfahrtszelle mit einem der Knoten der Abfahrtszelle verbinden, und von einer längsten Fahrtzeit ($\delta_j$) der kürzesten Strecken, die einen der Knoten der Ankunftszelle mit dem zentralen Knoten der Ankunftszelle verbinden, festgelegt wird.

**3.** Verfahren nach Anspruch 1 oder 2, wobei die Ermittlung (CH) der kürzesten Strecke (W) zwischen dem Quellknoten ($N_s$) und dem Zielknoten ($N_d$) eine Ermittlung (CH2-CH13, Ph = 1) der Abfahrtszelle ($C_i$) umfasst, bei welcher die kürzeste Strecke von dem Quellknoten zu dem zentralen Knoten der Abfahrtszelle eine Fahrtzeit aufweist, die im Vergleich zu Fahrtzeiten für Strecken von dem Quellknoten zu den zentralen Knoten der anderen Zellen des Graphen zu dem gegebenen Abfahrtszeitpunkt ($T_0$) am kürzesten ist.

**4.** Einrichtung zur Abschätzung (DEC) der von der Fahrtzeit her kürzesten Strecke (W) in Abhängigkeit von einem gegebenen Abfahrtszeitpunkt ($T_0$) zwischen einem Quellknoten ($N_s$) und einem Zielknoten ($N_d$), die einem gerichteten Graphen (GRT) zugehörig sind, der für ein Straßennetz repräsentativ ist und von Zellen ($C_1$-$C_c$) bedeckt ist, die Knoten ($N_1$-$N_N$) des Graphen und gerichtete Bögen ($A_{u,v}$) zwischen den Knoten enthalten, wobei jeder gerichtete Bogen voraussichtlichen Fahrtzeiten zugeordnet ist, die sich in der Zeit verändern und von Verkehrsmessungshistorien abhängen, **dadurch gekennzeichnet, dass** sie Folgendes umfasst:

- ein Mittel (PTR) für die Durchführung einer Vorauswertung des gerichteten Graphen, indem für jedes Paar aus einer Abfahrtszelle ($C_i$) und einer Ankunftszelle ($C_j$) ein Teilgraph ($SG_{i,j}$) ermittelt wird, der Knoten und gerichtete Bögen zwischen den Knoten enthält, welche die Strecken bilden, die jeweils einen der Knoten, die in der Abfahrtszelle enthalten sind, zu einem der Knoten, die in der Ankunftszelle enthalten sind, verbinden und jeweils eine Gesamtfahrtzeit aufweisen, die kleiner als ein Schwellwert ($H_{i,j}$) ist, und

- ein Mittel (DC) für die Ermittlung der kürzesten Strecke zu dem gegebenen Abfahrtszeitpunkt zwischen dem Quellknoten und dem Zielknoten, die durch Knoten, die einem der zuvor für ein Zellenpaar ermittelten Teilgraphen zugehörig sind, verläuft, wobei die Abfahrtszelle des Paares dergestalt ist, dass zu dem gegebenen Abfahrtszeitpunkt die Strecke von dem Quellknoten zu dem zentralen Knoten der Abfahrtszelle im Vergleich zu Strecken von dem Quellknoten zu den zentralen Knoten anderer Zellen von der Fahrtzeit her am kürzesten ist, und die Ankunftszelle des Paares den Zielknoten enthält, wobei die ermittelte Strecke die von der Fahrtzeit her kürzeste Strecke zwischen dem Quellknoten und dem Zielknoten ist, die in dem einen der Teilgraphen enthalten sind.

5. Computerprogramm, das für die Verwerdung in einer Computereinrichtung (DEC) geeignet ist und vorgesehen ist für die Abschätzung der von der Fahrtzeit her kürzesten Strecke (W) in Abhängigkeit von einem gegebenen Abfahrtszeitpunkt ($T_0$) zwischen einem Quellknoten ($N_s$) und einem Zielknoten ($N_d$), die einem gerichteten Graphen (GRT) zugehörig sind, der für ein Straßennetz repräsentativ ist und von Zellen ($C_1$-$C_c$) bedeckt ist, die Knoten ($N_1$-$N_N$) des Graphen und gerichtete Bögen ($A_{u,v}$) zwischen den Knoten enthalten, wobei jeder gerichtete Bogen voraussichtlichen Fahrtzeiten zugeordnet ist, die sich in der Zeit verändern und von Verkehrsmessungshistorien abhängen, wobei das Programm **dadurch gekennzeichnet ist, dass** es Anweisungen enthält, die, wenn das Programm in der Einrichtung ausgeführt wird, die Vorauswertung (PT-AP) und die Ermittlung (CH) des Verfahrens nach einem der Ansprüche 1 bis 3 durchführen.

# FIG. 1

# FIG. 2

# FIG. 3

PT0 — PRT : Début prétraitement de GRT($C_1$ à $C_C$) en fonction de ($C_i$, $C_j$)

PT

PT1 — $i = 1$

PT2 — $j = 1$

PT3 — $j = i$ ? → oui

non

PT4 — AD → Tb-$t_{i,j}$, Tb-$rt_{i,j}$
$H_{i,j} = d[NC_j] + \sigma_i + \delta_j$

PT5 — AP (FIG. 4) → $SG_{i,j}$ selon $H_{i,j}$

PT6 — $j = C$ ? → non → PT7 — $j = j+1$

oui

PT8 — $i = C$ , $j = C$ ? → non → PT9 — $i = i+1$

oui

PT10 — Fin prétraitement

FIG. 4

PT4

AP0 — $Q[NC_j]$ , $E = \varnothing$ , $SG_{i,j} = \varnothing$ , Arrêt = FAUX, $rt[NC_j] = 0$

AP

AP1 — $t[NC_j] = \infty$? → PT6

AP2 — $Q \neq \varnothing$ et Arrêt = FAUX ? —non→ AP3 $SG_{i,j} \rightarrow Msg$

↓ PT6

oui

AP4 — Extrait $N_x$ de Q avec $t[N_x] = min(t[Nq])$

AP5 — $N_x \rightarrow E$

AP6 — $rt[N_x] + t[N_x] < H_{ij}$ ? —oui→ AP7 $Nx \rightarrow SG_{i,j}$

non

AP8 — $rt[N_x] \geq H_{ij}$ ? —oui→ AP9 Arrêt = VRAI

non

AP10 — $\forall\ A_{x,y}$

AP11 — $N_y \in E$ ? —oui→

non

AP12 — $N_y \in Q$ ? —non→ AP13 $rt[N_y] = rt[N_x] + B_{inf}(N_y,N_x)$ $N_y \rightarrow Q$

oui

AP14 — $rt[N_x] + B_{inf}(N_x,N_y) < rt[N_y]$ ? —oui→ AP15 $rt[N_y] = rt[N_x] + B_{inf}(N_y,N_x)$

non

AP16 — non← Fin $A_{x,y}$ ? →oui

16

## FIG. 5

CH0: DC : $Q[N_S]$, $E = \varnothing$, $j = d$, $i = 0$, $Ph = 1$, $W = \varnothing$, $t[N_S] = 0 \to Tb\text{-}t_{s,d}$

CH

CH1: Extrait $N_x$ de Q avec $t[N_x] = \min(t[Nq])$

CH2: $N_x \to E$

CH3: $Ph = 1$ et $N_x = NC_c$ ? — oui → CH4: $i = c$ , $Ph = 2$

non

CH5: $\forall A_{x,y}$

CH6: $Ph = 1$ ou $Ph = 2 N_y \in SG_{ij}$ ou $N_y \subset C_j$ ? — non

oui

CH7: $N_y \in E$ ? — oui

non

CH8: $N_y \in Q$ ? — non → CH9: $t[N_y] = t[N_x] + Fc(N_y,N_x,t[N_x]+T_0)$, $p[N_y] = N_x$, $N_y \to Q$

oui

CH10: $t[N_x] + Fc(N_y,N_x,t[N_x]+T_0) < t[N_y]$ ? — oui → CH11: $t[N_y] = t[N_x] + Fc(N_y,N_x,t[N_x]+T_0)$, $p[N_y] = N_x$

non

CH12: Fin $A_{x,y}$ ? — non

oui

CH13: $N_x = N_d$ ? — non / oui → CH14: $W(N_d, p[N_d], p[p[N_d]], ..., N_s) \to Mp$

**EP 2 235 477 B1**

## RÉFÉRENCES CITÉES DANS LA DESCRIPTION

**Documents brevets cités dans la description**

- WO 9922205 A